(19) Europäisches Patentamt European Patent Office Office européen des brevets

(11) **EP 4 492 672 A1**

(12) **EUROPEAN PATENT APPLICATION**

(43) Date of publication:
**15.01.2025 Bulletin 2025/03**

(21) Application number: **23184490.3**

(22) Date of filing: **10.07.2023**

(51) International Patent Classification (IPC):
**H02P 9/00** (2006.01)      **H02P 9/12** (2006.01)
**H02P 29/66** (2016.01)

(52) Cooperative Patent Classification (CPC):
**H02P 9/006; H02P 9/123; H02P 29/662;**
H02P 2207/05

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Gamesa Renewable Energy
A/S**
**7330 Brande (DK)**

(72) Inventors:
- **Azar, Ziad**
  **Sheffield, S10 4ED (GB)**
- **Madani, Nima**
  **7100 Vejle (DK)**

(74) Representative: **SGRE-Association**
**Siemens Energy Global GmbH & Co. KG**
**SE I IM P Intellectual Property**
**Siemenspromenade 9**
**91058 Erlangen (DE)**

(54) **PREVENTION OF MAGNET DEMAGNETIZATION IN A ROTOR**

(57) It is described a method of controlling an electrical, in particular synchronous, generator system (4) comprising a generator (7) including a stator (8) having stator windings and a rotor (9) having plural permanent magnets (10), in particular of a wind turbine, the method comprising: monitoring when a magnet temperature indicates a critical condition; in case of the critical condition, entering a magnet preventive protection control mode including to shift a phase of a generator current/s (21).

FIG 2

EP 4 492 672 A1

**Description**

Field of invention

The present invention relates to a method and to a corresponding controller of controlling an electrical generator system in particular for prevention and or minimisation of magnet demagnetization. Furthermore, the present invention relates to an electrical generator system comprising the controller and further relates to a wind turbine comprising the electrical generator system.

Art Background

An electrical generator may comprise plural permanent magnets mounted to a rotor house which is rotatably supported relative to a stator. In case of unwanted or undesired high temperature or high stator currents, the permanent magnet may be at risk to get irreversibly fully or partially demagnetized. A short-circuit in one of the stator windings may occur or may be expected to occur at least once during the turbine lifetime or the generator lifetime. Therefore, the permanent magnets are conventionally designed to withstand such fault as worst operations, i.e., highest allowed magnet temperature. This may conventionally be mitigated in the design by requiring a larger amount of magnet material leading to higher costs, higher weight and/or power derating at a lower ambient temperature meaning loss of energy production. In case of full or partial irreversible demagnetization faults of the permanent magnets, the generator may be stopped and in particular a wind turbine needs to be stopped and the generator need to be equipped with newly non-demagnetized permanent magnets. This comes at additional costs, i.e. crane, new magnets, loss of supply to the customer.

Thus, there may be a need for a method and a corresponding controller of controlling an electrical generator system comprising permanent magnets wherein the risk of demagnetization of the magnets or the risk of generally damage of the permanent magnets is reduced. Further, there may be a need for an electrical generator system capable of in particular prevention of demagnetization or reduction of the risk of demagnetization of the permanent magnets and there may be further a need for a wind turbine comprising the generator system.

Summary of the Invention

This need may be met by the subject matter according to the independent claims. Advantageous embodiments of the present invention are described by the dependent claims.

According to an embodiment of the present invention it is provided a method of controlling an electrical, in particular synchronous, generator system comprising a generator including a stator having at least one set (or multiple sets, e.g. 2, 3, 4, 5, 6, or a larger number of sets) of stator windings and a rotor having plural permanent magnets, in particular of a wind turbine, the method comprising: monitoring when a magnet temperature indicates a critical condition; in case of the critical condition, entering a magnet preventive protection control mode including to shift of the phase angle of the generator current of at least one phase (or all phases) of the at least one winding set.

The method may for example be implemented in software and/or hardware and/or may be performed by a portion of a controller, in particular a wind turbine controller. The stator may be configured as a segmented stator comprising plural stator segments or may be provided as a non-segmented stator covering the entire circumference. The stator windings may be provided in a concentrated winding topology or distributed winding topology. If the generator system comprises plural winding sets, to each of the winding sets, embodiments of the present invention may be employed or performed, including to shift the phase of the generator current of any of the winding sets.

The magnet temperature may relate to a measured or estimated or derived temperature of one or more of the permanent magnets. The magnet temperature may be measured by one or more temperature sensors installed at the rotor for example for measuring the magnet temperature of one or more of the permanent magnets. In particular, if at least one of the measured or derived temperatures relating to one or more of the magnets indicates a dangerous or critical condition, for example when the temperature reaches a threshold, then the critical condition may be indicated. Thereby, all permanent magnets may be protected from demagnetization.

The generator currents (e.g. A-phase, of a particular one of a considered winding set) may have (previous to the occurrence of the critical condition) a particular electrical phase relative to a reference, in particular the voltage (of the same phase, e.g. A-phase) of the considered winding set. The method may then include to shift the phase angle or angles of the generator current/s (in particular for each of the plural phases, for example three phases) to be different from the condition before the critical condition has been indicated. The phase-shift (e.g. for each electrical phase of the winding set) may be for example between $\pm 5$ electrical degrees to $\pm 40$ electrical degrees (e.g. relative to the respective voltage for each respective electrical phase of the winding set).

When the phase angle of the generator current is shifted, in particular prior to a fault condition, a current peak value occurring later due to a fault, such as a short-circuit, may be reduced so that demagnetization of the permanent magnets may be avoided.

The critical condition may be indicated in case that a magnet temperature satisfies one or more criteria, as will be explained below.

The magnet preventive protection control mode may be considered as a particular control mode of the generator system which is aimed at protecting the permanent magnets from demagnetization. The magnet preventive protection control mode may be characterized for example still by a reference active power and/or reference reactive power, reference voltage, reference and/or winding temperature and/or reference ambient temperature. According to embodiments of the present invention, a reference active power and/or reactive power may or may not be met, e.g. in favour of more efficiently or effectively protecting the permanent magnets.

The shift of the phase of the generator may in particular performed prior to the occurrence of a short-circuit in one of the stator windings or in the single stator winding set, depending on the construction of the stator. Thereby, embodiments of the present invention provide methods and controllers to prevent a permanent generator (turbine) performance loss, i.e., permanently lower power output, due to magnet irreversible demagnetization which is for example caused by short-circuit faults which might occur once the magnet temperature reaches a certain level.

According to embodiments of the present invention, better magnet material utilization may be enabled, as the generator system may be designed for optimal performance per magnet volume with no need for extra material to prevent irreversible demagnetization. Furthermore, embodiments of the present invention may allow to delay the power de-rating which might have been applied in conventional methods.

According to an embodiment of the present invention, the magnet preventive protection control mode includes, in particular for each set of stator winding present, controlling the electrical generator system in order to shift the phase (angle) of the generator current (e.g. for each phase, e.g. A-phase, B-phase, C-phase) relative to a phase (angle) of a generator voltage or a q-axis or a d-axis.

The phase (angle) of the generator voltage (for a considered electrical phase and a considered winding set) may be given or determined by the position of the rotating rotor relative to the stator due to the fact that the permanent magnets induce voltages in the stator windings. A dq-synchronously rotating coordinate frame rotates synchronously with the rotor. The zero crossing, where the stator winding voltage increases, may correspond to the location of the q-axis. The maximum voltage at the electrical angle of 90° may correspond to the position of the d-axis of the dq-coordinate system. During the method, the phase (angle) of the generator current may be shifted relative to the voltage phase (angle) which may also be expressed as to be shifted relative to the q-axis. The phase (angle) of the generator current may be more negative than the phase (angle) of the generator voltage, for example by an amount of 5° to 40° less than the voltage phase (angle) .

For controlling the electrical generator system, a controller according to an embodiment of the present invention may be employed. In a coordinate system having as an abscissa an electrical angle and having as an ordinate an amplitude of the voltage or current, the stator winding voltage may for example form a substantially a sinusoidal curve having the crossing zero at the electrical angle zero and having the maximum at the electrical angle of 90°. The generator current is then shifted according to the control method such that a graph of the current is right shifted relative to the stator voltage by an amount of for example between 10° and 30°. The right shift of the generator current corresponds to a negative relative phase (angle) between the current and voltage or corresponds to the condition, where the generator current has a more negative electrical phase (angle) than the generator voltage. Thereby, high current peaks which might occur after a fault condition, such as a short-circuit, may be reduced, in order to avoid irreversible demagnetization of the permanent magnets.

According to an embodiment of the present invention, shifting the phase (angle) of a generator current includes at least one of: advancing the phase (angle) of the generator current relative to a previous phase (angle) of the generator current; advancing the phase (angle) of the generator current relative to the phase (angle) of the generator voltage or a q-axis; setting the phase (angle) of the generator current to be different than the phase (angle) of the generator voltage or a q-axis; setting the phase (angle) of the generator current to be smaller than the phase (angle) of the generator voltage or a q-axis; setting the phase (angle) of the generator current to be different than the phase (angle) of the generator voltage or a q-axis such that a difference phase depends on the magnet temperature; setting the phase (angle) of the generator current to be by between 40° and 5°, in particular 30° and 10°, smaller than the phase (angle) of the generator voltage or a q-axis; dynamically adjusting a relative phase (angle) between generator current and voltage or a q-axis based on the magnet temperature.

Advancing the phase (angle) of the generator current may mean to right shift a current graph relative to a voltage graph. Before entering the magnet preventive protection control mode, the relative electrical phase angle between the generator current and the generator voltage may be zero or may be different from zero depending on the desired performance or reference for example reactive power. The relative angle of zero may correspond to the maximum torque generation by the generator which may lead to the maximum power output or active power output, or maximum torque per amber, or maximum voltage. However, in some productive operational modes, the relative electrical angle may be set to be different from zero. When entering the magnet preventive protection control mode, however, the relative angle may be changed such that the current electrical angle is smaller than the current electrical angle before entering the magnet preventive protection control mode and such that in particular the current electrical angle is smaller than the voltage electrical angle. The above-described embodiments regarding the shifting of the phase of the generator current may allow high flexibility and adaptation of the method according to the requirements.

According to an embodiment of the present invention, the magnet temperature relates to or comprises at least one of: a temperature of at least one of the permanent magnets, in particular a measured temperature; a mean temperature of the plural permanent magnets; a maximum temperature of the plural permanent magnets, or a derived magnet temperature based on measured flux linkage or phase voltage or rated power and current.

It might have been observed that prior to a short-circuit in the stator windings, the temperature of the magnet may already increase. Thus, triggering the magnet preventive protection control mode based on the magnet temperature may allow to shift the generator current phase (angle) prior to the actual occurrence of the short-circuit.

According to an embodiment of the present invention, the electrical generator system comprises at least one converter connected to the stator windings, wherein controlling the electrical generator system includes to control the converter by supplying a control signal indicative of a (relative) electrical phase angle of the generator currents.

The converter may comprise a generator side converter portion, a DC link and a utility grid converter portion. In particular, according to embodiments of the present invention, the generator side converter portion may be controlled. Each of the generator converter portions may comprise plural controllable switches, such as high-power transistors, which may be supplied with respective gate control signals for defining desired electrical output quantities. One quantity which might be controllable by the (generator side) converter portion may be the relative electrical phase angle of the generator current relative to the generator voltage. The generator current is to be understood as the current flowing in the one or more winding sets of the generator. The relative electrical angle of the generator current relative to the generator voltage may relate to the relative electrical angle of one of the phases of the multiple phases of the generator currents flowing in the set of stator windings. For each phase of the windings the shift of the generator current phase angle may be applied.

According to an embodiment of the present invention, the controlling the electrical generator system is further performed in order to change an amplitude of the generator current, in particular in dependence of the magnet temperature and/or an amount of the shift of the generator current phase angle and/or a power demand or reference value.

Alternatively or additionally to the phase (angle) of the generator current/s, also the amplitude of the generator current/s may be controlled or changed when the magnet preventive protection control mode is entered. For example, when the phase (angle) of the generator current relative to the generator voltage is set, such that the current phase (angle) is more negative than the voltage phase (angle), the amplitude of the current may either be increased or decreased, for example to substantially maintain an active power output. The amplitude of the current may be controlled according to the particular application.

According to an embodiment of the present invention, controlling the electrical generator system is performed in order to change the (relative) phase (angle) and the amplitude of the generator current in combination, such that a power output of the generator system complies with a power reference or is substantially unchanged. Thereby, power output performance may be maintained while at the same time, demagnetization of the permanent magnets may be prohibited or avoided.

According to an embodiment of the present invention, the phase angle is shifted before the occurrence of a fault or fault condition of the generator system.

A fault of the generator system may have the consequence that shortly after the fault, such as being 10 ms and 50 ms later, relatively high current peak is expected or observed in the stator windings. This relatively high current peak would conventionally demagnetize permanently the permanent magnets. Wherein, however, the phase angle is shifted before the occurrence of the fault, the amplitude of the high current peak may be reduced, potentially prohibiting demagnetization of the magnets.

According to an embodiment of the present invention, the fault or fault condition is present if at least one of the following occurs or holds: a short circuit related to the stator, in particular in at least one stator winding; a fault in at least one portion of the converter; a fault in a breaker; a fault in a DC-link between converter portions. Thereby, a great variety of potential faults may be supported.

According to an embodiment of the present invention, a peak current occurs after the fault and after shifting the (relative) phase angle and before a breaker opens, wherein a peak current amplitude is below a current threshold above which demagnetization of at least one permanent magnet would be caused.

The peak current may for example occur between 10 ms and 40 ms after the occurrence of the fault, in particular short-circuit. The phase (angle) of the generator current may, however, have been shifted before the occurrence of the fault. The occurrence of the short-circuit current peak value may be too quick for a circuit breaker to open. Thus, embodiments of the present invention may enable to achieve that the peak current amplitude stays below the current threshold above which demagnetization of a permanent magnet would be caused.

According to an embodiment of the present invention, the critical condition is detected if at least one of the following criterium is satisfied: the magnet temperature is above a first threshold, in particular for at least a first threshold time period; the magnet temperature is below a second threshold, in particular for less than a second threshold time period, wherein a temperature above the second threshold would cause demagnetization of the magnet; a rate of increase of the magnet temperature is above a threshold rate, in particular for at least a third threshold time period; a combination of the above criteria.

Thereby, great flexibility is provided to adapt the method according to the particular requirements or the application.

It may allow the use of magnets with lower coercivity, or the use of less magnet volume.

It should be understood, that features, individually or in any combination, disclosed, described, applied or employed for a method of controlling an electrical generator system may also, individually or in any combination, applied or provided for a controller for controlling an electrical generator system according to embodiments of the present invention and vice versa.

According to an embodiment of the present invention, it is provided a controller for controlling an electrical, in particular synchronous, generator system comprising a generator including a stator having stator windings and a rotor having plural permanent magnets, in particular of a wind turbine, the arrangement comprising: an input port adapted to receive an indication signal when a magnet temperature indicates a critical condition; the controller being adapted, to, in case of the critical condition, enter a magnet preventive protection control mode including to shift a phase of a generator current, in particular adapted to carry out or control a method according to any one of the preceding claims.

The controller may be implemented in software and/or hardware. The controller may be a portion of a generator controller or a wind turbine controller. In embodiments of the present invention, the controller may further comprise one or more temperature measurement sensors which are installed to measure the temperature of one or more of the permanent magnets. The controller may comprise arithmetic/logical circuitry, in particular a (semiconductor) processor.

According to an embodiment of the present invention, the controller is adapted to generate and output a control signal causing the generator system to shift the phase angle of the generator current relative to a generator voltage.

The control signal may for example be configured as a converter control signal supplying one or more reference values to a converter or a converter controller. The control system or a control signal generated by the converter controller may include gate driver signals for the one or more controllable switches comprised in the converter, in particular in the generator side converter portion.

According to an embodiment of the present invention it is provided an electrical, in particular synchronous, generator system, comprising: a generator including a stator having stator windings and a rotor having plural permanent magnets; in particular a converter electrically connected to the stator windings of the generator; and a controller according to one of the two preceding claims connected to control the system, in particular the converter.

Furthermore, it is provided a wind turbine, including: an electrical generator system according to the preceding claim; a hub at which plural rotor blades are connected and which is mechanically coupled to the rotor of the generator.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments.

Fig. 1 schematically illustrates a wind turbine according to an embodiment of the present invention comprising an electrical generator system according to an embodiment of the present invention which includes a controller according to an embodiment of the present invention;

Fig. 2 illustrates curves of a generator current and generator voltage as set according to embodiments of the present invention;

Fig. 3 illustrates curves representing short-circuit current peak values for different relative electrical phase angles between current and voltage;

Fig. 4 illustrates curves of phase currents having different electrical phase angles as applied according to embodiments of the present invention; and

Fig. 5 illustrates curves of a generator current having different phase angles and also different amplitudes as applied according to embodiments of the present invention.

Detailed Description

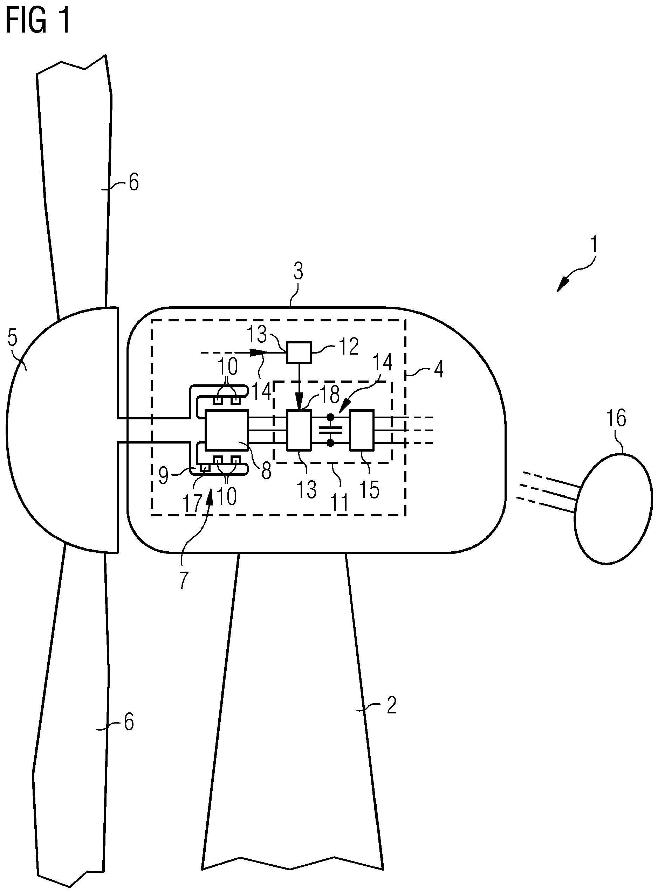

The wind turbine 1 schematically illustrated in **Fig. 1** comprises a wind turbine tower 2 on top of which a nacelle 3 is mounted. The nacelle 3 harbours an electrical generator system 4 according to an embodiment of the present invention. The generator system 4 is mechanically coupled to a hub 5 at which plural rotor blades 6 are mounted.

The electrical generator system 4 comprises a generator 7 including a stator 8 having stator windings and a rotor 9 having plural permanent magnets 10. The generator system 4 further comprises a converter 11 which is electrically connected to the stator windings of the generator 7. Further, the generator system 4 comprises a controller 12 for controlling the electrical generator system 4 which is connected to control the system.

In the embodiment illustrated in Fig. 1, the converter 11 comprises a generator side converter portion 13, a DC link 14 and a utility grid converter portion 15 which is via one or more optional transformers connected or connectable to a utility grid 16 to provide in particular three-phase electrical power to the utility grid 16.

The controller 12 comprises an input port 13 adapted to receive an indication signal (e.g. temperature signal) 14 when a magnet temperature indicates a critical condition. The indication signal 14 may for example be or comprise a temperature measurement signal of a temperature sensor 17 which is mounted at the rotor 9 to measure the temperature of one or more of the permanent magnets 10. In other embodiments, the indication signals 14 may be a binary signal which may for example be derived by logic/arithmetic unit defining whether the critical condition is present, in particular based on the temperature of one or more of the magnets 10.

The controller 12 is adapted to, in case of the critical condition, enter a magnet preventive protection control mode, including to shift a phase (angle) of a generator current. In the embodiment illustrated in Fig. 1, the controller is configured to generate and output a control signal 18 to the generator side portion 13 of the converter 11 which controls the generator 7 such that the phase (angle) of the generator current is shifted relative to a generator voltage phase (angle) .

The controller 4 in particular together with the temperature sensor 17 is adapted or configured to carry out a method of controlling the electrical machine of the electrical generator system 4. Thereby, a magnet temperature is monitored (for example via the temperature sensor 17) and it is checked whether the temperature indicates a critical condition. In case of the critical condition, a magnet preventive protection control mode is entered including to shift the phase of the generator current.

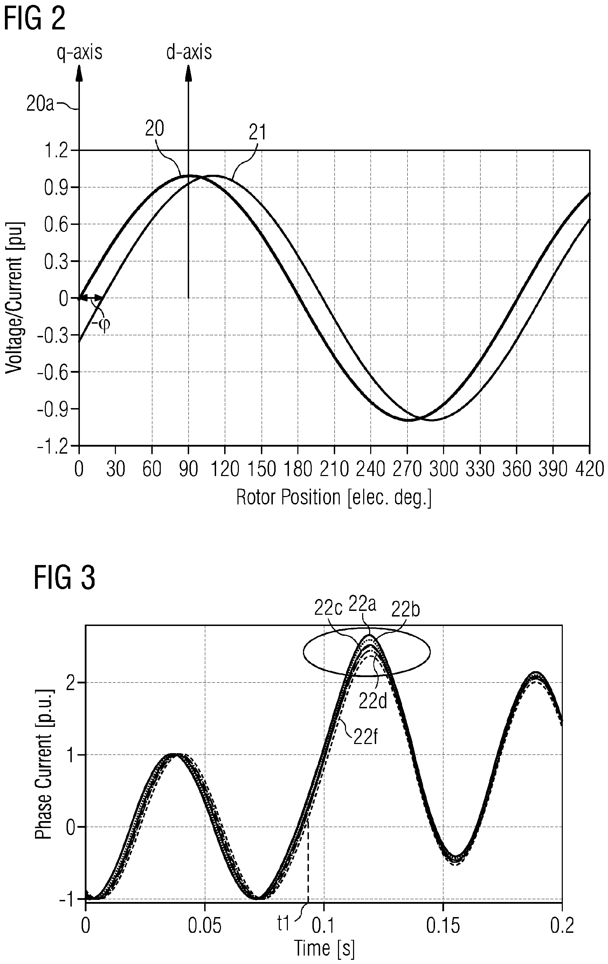

Fig. 2 illustrates a curve in a coordinate system having as an abscissa the electrical rotor position and having as an ordinate a magnitude of electrical quantities. The curve 20 represents the generator voltage and the curve 21 represents a generator current (of one phase, for example the A-phase), when a magnet preventive protection control mode has been entered. As can be appreciated from Fig. 2, the prevention protection control mode includes to shift the phase (angle) of the generator current 21 relative to a phase (angle) of the generator voltage 20. The phase shift is labelled with reference sign φ. The current 21 is advanced relative to the generator voltage 20. The voltage U(t) and the current I(t) may be given according to the following equations:

$$U(t) = U0 * sin(w*t)$$

$$I(t) = I0 * sin(w*t - \varphi),$$

where w is the electrical rotational speed.

Thus, the phase of the generator current I(t) is smaller than the phase of the generator voltage U(t). The value of -φ may change between -10 and -30°, for example, or may have even different values.

In the embodiment illustrated in Fig. 1, the generator system 4 comprises the converter 11 and controlling the electrical generator system 4 includes to control the converter 11, in particular the generator side portion 13 by supplying the control signal 18 indicative of a (relative) electrical phase angle of the generator current. The control signal 18 may either directly indicate the phase-shift angle or may for example indicate a reference of active power and/or voltage.

Fig. 3 illustrates curves in a coordinate system having as an abscissa the time and having as an ordinate the phase current. At a point in time which is earlier than the illustrated curves, a magnet preventive protection control mode has already been entered including to shift the generator current relative to the generator voltage. The curves 22a, ..., f indicate the short-circuit current peak values, when the generator current is -10 electrical degrees, -15, -20, -25, -30, or -35 electrical degrees relative to the generator voltage. It can be appreciated that the larger the negative phase-shift of the generator current, the lower the short-circuit current peak value. Thereby, demagnetization of permanent magnets after a fault which happened at a point in time t1 may be avoided. At the time t1, for example, a short-circuit may have occurred in one or more phases of the one or more stator windings.

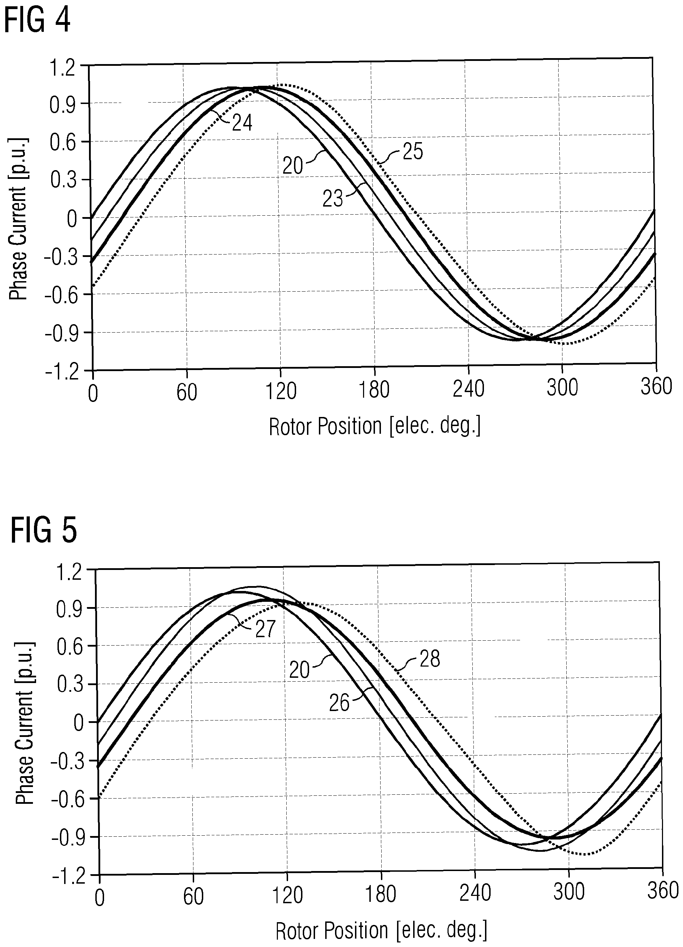

Figs. 4 and 5 illustrate embodiments how to shift a phase (angle) of a generator current and/or change an amplitude of a generator current in a magnet preventive protection control mode according to embodiments of the present invention. Thereby, the abscissas in Figs. 4 and 5 indicate the electrical rotor position and the ordinates represent the phase currents. The curves 20 in Figs. 4 and 5 again illustrate the generator voltage. The curves 23, 24, 25 indicate the phase currents when the phase-shift is -10°, -20° or -30° relative to the generator voltage 20 and has the same amplitude, for example as prior to the indication of the critical condition.

The curves 26, 27, 28 in Fig. 5 illustrate the generator currents where the phase-shift is -10, -20 or -30 electrical angles and further having different amplitudes (than before the indication of the occurrence of the critical condition).

Embodiments of the present invention provide a magnet preventive protection control mode, wherein the generator phase current angle is advanced by the generator converter, via setting a control mode that is activated when the magnet temperature reaches a certain level. Therefore, in case of a fault occurrence (see for example time point t1 in Fig. 3), the permanent magnets (for example 10 in Fig. 1) (and the generator) may be protected, since the fault currents will be lower as has been illustrated in Fig. 3 compared to the condition, where the phase current value is not advanced.

The current angle advancing level (i.e., the shift of the generator current relative to the generator voltage) may be for example a function of a magnet temperature. Sensors (for example temperature sensors 17 in Fig. 1) may be conventionally installed in a generator system. Therefore, the proposed technique may be cost-free and no additional hardware may be required.

As can be appreciated from Fig. 3, it is confirmed by calculation and measurements that the value of the short-circuit current peak during the fault is determined by the phase current angle prior to the fault. The more advanced the phase current angle is, the less the value of the short-circuit current peak is, as can be seen in Fig. 3.

The following table 1 shows the permanent performance loss due to short-circuit faults vs. phase current angle:

Table 1:

| phase angle shift (relative to voltage) [°] | Permanent Torque loss due to Short-Circuit Faults [%] |
| --- | --- |
| -10 | 1.47 |
| -15 | 1.086 |
| -20 | 0.72 |
| -21 | 0.64 |
| -25 | 0.46 |
| -30 | 0.27 |

The table illustrates the variation of the permanent performance loss due to short-circuit faults as a function of the phase current angle set prior to the fault.

The Fig. 4 demonstrates an example of phase current waveforms for different current angles, i.e., at a fixed current amplitude. It is also possible, that the current amplitude can be varied, as needed by the power demand, when the current angle is advanced, as is illustrated in the Fig. 5.

The embodiments of the present invention may provide the one or more of the following advantages:

- Lower generation cost, as less magnet material may be required.
- Higher energy output, as power derating vs. ambient temperature can be delayed.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method of controlling an electrical, in particular synchronous, generator system (4) comprising a generator (7) including a stator (8) having at least one set of stator windings and a rotor (9) having plural permanent magnets (10), in particular of a wind turbine, the method comprising:

    monitoring when a magnet temperature indicates a critical condition
    in case of the critical condition, entering a magnet preventive protection control mode including to shift a phase angle of a generator current (21).

2. Method according to the preceding claim, wherein the magnet preventive protection control mode includes:

controlling the electrical generator system (4) in order to shift the phase angle of the generator current (21) of at least one phase, in particular all phases, of the at least set of stator windings relative to a phase angle of a generator voltage (10) or a q-axis (20a).

3. Method according to any one of the preceding claims, wherein shifting the phase angle of a generator current in particular of all phases of one or more sets of stator windings, includes at least one of:

advancing the phase angle of the generator current (21) relative to a previous phase of the generator current;
advancing the phase angle of the generator current (21) relative to the phase of the generator voltage (20) or a q-axis (20a);
setting the phase angle of the generator current (21) to be different than the phase of the generator voltage (20) or a q-axis (20a);
setting the phase angle of the generator current (21) to be smaller than the phase angle of the generator voltage or a q-axis (20a);
setting the phase angle of the generator current (21) to be different than the phase angle of the generator voltage (20) or a q-axis (0a) such that a difference angle phase ($\Phi$) depends on the magnet temperature;
setting the phase angle of the generator current (21) to be by between 40° and 5°, in particular 30° and 10°, in reference to the phase angle of the generator voltage (20) or a q-axis (20a);
dynamically adjusting a relative phase angle ($\Phi$) between generator current (21) and voltage (20) or a q-axis (20a) based on the magnet temperature and/or magnet temperature variations.

4. Method according to any one of the preceding claims, wherein the magnet temperature relates to or comprises at least one of:

a temperature of at least one of the permanent magnets (10), in particular a measured temperature;
a mean temperature of the plural permanent magnets (10);
a mean temperature of one or more specific permanent magnets;
a maximum temperature of one or more specific permanent magnets;
a maximum temperature of the plural permanent magnets (10) .

5. Method according to any one of the preceding claims,

wherein the electrical generator system (4) comprises at least one converter (11) connected to the stator windings,
wherein controlling the electrical generator system (4) includes to control the converter (11, 13) by supplying a control signal (18) indicative of a electrical phase angle of the generator current (21).

6. Method according to any one of the preceding claims, wherein the controlling the electrical generator system (4) is further performed in order to change an amplitude of the generator current (26, 27, 28), in particular in dependence of the magnet temperature and/or an amount of the shift of the generator current phase angle and/or a power demand or reference value.

7. Method according to any one of the preceding claims, wherein controlling the electrical generator system (4) is performed in order to change the phase and the amplitude of the generator current (26, 27, 28) in combination, such that a power output of the generator system complies with a power reference or is substantially unchanged.

8. Method according to any one of the preceding claims, wherein the phase angle is shifted before occurrence of a fault or fault condition of the generator system (4).

9. Method according to any one of the preceding claims, wherein the fault or fault condition is present if at least one of the following occurs or holds:

a short circuit related to the stator, in particular in at least one stator winding;
a fault in at least one portion of the converter;
a fault in a breaker;
a fault in a DC-link between converter portions.

10. Method according to any one of the preceding claims, wherein a peak current (22a,...,f) occurs after the fault and after shifting the phase angle and before a breaker opens, wherein a peak current amplitude is below a current threshold above which demagnetization of at least one permanent magnet would be caused.

11. Method according to any one of the preceding claims, wherein the critical condition is detected if at least one of the following criterium is satisfied:

the magnet temperature is above a first threshold, in particular for at least a first threshold time period;
the magnet temperature is below a second threshold, in particular for less than a second threshold time period, wherein a temperature above the second threshold would cause demagnetization of the magnet;
a rate of increase of the magnet temperature is above a threshold rate, in particular for at least a third threshold time period;
a combination of the above criteria.

12. Controller (12) for controlling an electrical, in particular synchronous, generator system (4) comprising a generator (7) including a stator (8) having at least one set of stator windings and a rotor (9) having plural permanent magnets (10), in particular of a wind turbine (1), the arrangement comprising:

an input port (18) adapted to receive an indication signal when a magnet temperature indicates a critical condition;
the controller (12) being adapted, to, in case of the critical condition, enter a magnet preventive protection control mode including to shift a phase angle of a generator current (21) of at least one phase of the at least one set of stator windings,
in particular adapted to carry out or control a method according to any one of the preceding claims.

13. Controller (12) according to the preceding claim, wherein the controller is adapted to generate and output a control signal (18) causing the generator system (4) to, for at least one phase of the at least one set of stator windings, shift the phase angle of the respective generator current (21) relative to a respective generator voltage (20).

14. Electrical, in particular synchronous, generator system (4), comprising:

a generator (7) including a stator (8) having at least one set of stator windings and a rotor (9) having plural permanent magnets (10);
in particular, in particular for each set of stator windings, a converter (11, 13) electrically connected to the respective set of stator windings of the generator; and
a controller (12) according to one of the two preceding claims connected to control the system, in particular the converter (11, 13).

15. Wind turbine (1), including:

an electrical generator system (4) according to the preceding claim;
a hub (5) at which plural rotor blades (6) are connected and which is mechanically coupled to the rotor (9) of the generator (7).

**FIG 1**

## FIG 2

## FIG 3

## FIG 4

## FIG 5

| | Europäisches Patentamt European Patent Office Office européen des brevets | **EUROPEAN SEARCH REPORT** | Application Number EP 23 18 4490 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/269822 A1 (AIZAWA JUNICHI [JP] ET AL) 20 September 2018 (2018-09-20) | 1-8, 12-14 | INV. H02P9/00 |
| Y | * paragraph [0058]; figure 1 * <br> * paragraph [0039]; figure 10 * <br> * paragraph [0003] * <br> * paragraph [0147] * <br> * paragraph [0164] * | 9,10 | H02P9/12 <br> H02P29/66 |
| X | CN 103 034 261 A (WUXI WIND POWER INST CO LTD) 10 April 2013 (2013-04-10) | 1,4,5,8, 11,12, 14,15 | |
| Y | * paragraph [0008] * <br> * paragraph [0017] * | 9,10 | |
| Y | US 2017/030984 A1 (DENG HENG [DK]) 2 February 2017 (2017-02-02) <br> * paragraph [0017] * | 9 | |
| Y | US 2019/238077 A1 (AZAR ZIAD [GB] ET AL) 1 August 2019 (2019-08-01) <br> * paragraph [0101]; figure 12 * | 10 | |

TECHNICAL FIELDS SEARCHED (IPC)

H02P

The present search report has been drawn up for all claims

| Place of search | Date of completion of the search | Examiner |
|---|---|---|
| Munich | 11 January 2024 | Fligl, Stanislav |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 4 492 672 A1**

## ANNEX TO THE EUROPEAN SEARCH REPORT
## ON EUROPEAN PATENT APPLICATION NO.

EP 23 18 4490

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2024

| Patent document cited in search report | | Publication date | Patent family member(s) | | Publication date |
|---|---|---|---|---|---|
| US 2018269822 | A1 | 20-09-2018 | JP | 6218976 B2 | 25-10-2017 |
| | | | JP | WO2016125567 A1 | 27-04-2017 |
| | | | US | 2018269822 A1 | 20-09-2018 |
| | | | WO | 2016125567 A1 | 11-08-2016 |
| CN 103034261 | A | 10-04-2013 | NONE | | |
| US 2017030984 | A1 | 02-02-2017 | CN | 106401881 A | 15-02-2017 |
| | | | DK | 3125418 T3 | 12-08-2019 |
| | | | EP | 3125418 A1 | 01-02-2017 |
| | | | US | 2017030984 A1 | 02-02-2017 |
| US 2019238077 | A1 | 01-08-2019 | CN | 110112990 A | 09-08-2019 |
| | | | EP | 3522362 A1 | 07-08-2019 |
| | | | US | 2019238077 A1 | 01-08-2019 |

EPO FORM P0459

For more details about this annex : see Official Journal of the European Patent Office, No. 12/82